# DEMANDE DE BREVET EUROPEEN

(11) **EP 1 288 563 A1**
(43) Date de publication de la demande: **05.03.2003**
(21) Numéro de dépôt: 02291781.9
(22) Date de dépôt: 15.07.2002
(51) Int. Cl.: F21S 8/12, F21V 14/08

(54) **Dispositif d'éclairage réalisant un faisceau d'éclairage pour la circulation par temps pluvieux**

(30) Priorité: 24.08.2001 FR 0111149
(71) Demandeur: VALEO VISION, 93012 Bobigny Cédex (FR)
(72) Inventeur: Blusseau, Eric, 49000 Angers (FR); Albou, Pierre, 75013 Paris (FR)
(74) Mandataire: Renous Chan, Véronique

(57) **Abrégé**

L'invention propose un dispositif d'éclairage comportant deux projecteurs qui réalisent un faisceau d'éclairage réglementaire de feu de croisement et qui sont susceptibles de fonctionner en mode pluie, et deux projecteurs (22, 24) qui réalisent un faisceau d'éclairage réglementaire du type feu de route, du type dans lequel chaque projecteur de feu de route (22, 24) comprend une source lumineuse (26), un réflecteur (28) du type elliptique, une lentille convergente (30), caractérisé en ce que au moins un projecteur de feu de route (22, 24) comporte un cache (46) qui est intercalé axialement entre le réflecteur (28) et la lentille (30), et qui est monté mobile entre une position escamotée et une position d'occultation dans laquelle il modifie la forme du faisceau d'éclairage produit par le projecteur de route (22, 24) associé de manière à réaliser un faisceau d'éclairage complémentaire pour la circulation par temps pluvieux.

## Description

La présente invention concerne un dispositif d'éclairage de véhicule automobile.

La présente invention concerne plus particulièrement un dispositif d'éclairage agencé à l'avant d'un véhicule automobile comportant, de part et d'autre de l'axe longitudinal du véhicule, deux projecteurs qui réalisent un faisceau d'éclairage réglementaire de feu de croisement et qui sont susceptibles de fonctionner en mode pluie de manière à réaliser un faisceau d'éclairage réglementaire pour la circulation par temps pluvieux, et deux projecteurs qui réalisent un faisceau d'éclairage réglementaire du type feu de route, ou du type feu de route complémentaire, du type dans lequel chaque projecteur de feu de route comprend une source lumineuse, un réflecteur du type elliptique dont un premier foyer est situé au voisinage de la source, une lentille convergente dont un plan focal passe au voisinage d'un second foyer du réflecteur.

Dans le domaine de l'éclairage des véhicules automobiles, on cherche à mettre au point de nouvelles prestations en vue d'améliorer la qualité de l'éclairage fourni par les projecteurs de véhicule, notamment dans certaines conditions particulières de circulation, en particulier lorsque le véhicule circule par temps pluvieux.

En effet, par temps pluvieux, les véhicules circulent en feu de croisement et les projecteurs d'éclairage émettent des rayons lumineux qui tendent à se réfléchir sur la chaussée, ce qui peut provoquer une gêne par éblouissement à l'encontre des conducteurs de véhicules circulant en sens inverse.

La réglementation a donc défini les caractéristiques d'un faisceau d'éclairage qui est prévu pour la circulation par temps pluvieux.

Le faisceau d'éclairage pour la circulation par temps pluvieux repose globalement sur des modifications du faisceau réglementaire de feu de croisement. Il se distingue du faisceau de feu de croisement notamment par une intensité lumineuse moindre du côté gauche de l'axe longitudinal, pour un sens de circulation à droite.

La réglementation permet aussi de compenser la diminution de l'intensité lumineuse du côté gauche par une augmentation de l'intensité lumineuse émise dans une zone qui est située sous la coupure du faisceau de feu de croisement et qui est décalée horizontalement vers la droite par rapport à l'axe longitudinal du véhicule.

Actuellement on rencontre des difficultés pour réaliser ce faisceau d'éclairage pour la circulation par temps pluvieux avec des projecteurs classiques.

Il est relativement facile de diminuer l'intensité lumineuse du côté gauche, par exemple en utilisant des dispositifs d'occultation de formes appropriées, mais il est plus difficile d'augmenter l'intensité lumineuse dans une zone particulière, comme l'autorise la réglementation.

Pour résoudre ce problème, il a été proposé d'utiliser un projecteur supplémentaire, en plus des projecteurs de feu de croisement et de feu de route, qui est prévu pour fonctionner exclusivement par temps pluvieux et dont le faisceau d'éclairage est dédié à l'éclairage de la zone réglementaire d'intensité lumineuse supérieure.

Cette solution n'est pas satisfaisante pour des raisons évidentes de coût, d'encombrement et d'esthétique.

L'invention vise à remédier à ces inconvénients en proposant un nouveau dispositif d'éclairage qui soit simple et économique.

Dans ce but, l'invention propose un dispositif d'éclairage du type décrit précédemment, caractérisé en ce que au moins un projecteur de feu de route comporte un cache qui est intercalé axialement, suivant l'axe optique du projecteur, entre le réflecteur et la lentille, et qui est monté mobile entre une position escamotée et une position d'occultation dans laquelle il modifie la forme du faisceau d'éclairage produit par le projecteur de route associé de manière à réaliser un faisceau d'éclairage complémentaire pour la circulation par temps pluvieux qui enrichit sélectivement le faisceau d'éclairage réglementaire pour la circulation par temps pluvieux produit par les projecteurs de croisement.

Grâce au dispositif d'éclairage selon l'invention, la fonction feu de route, ou feu de route complémentaire, et le dispositif permettant de compléter le faisceau d'éclairage pour la circulation par temps pluvieux sont regroupés dans le même projecteur. Il n'y a donc pas de surface apparente supplémentaire de consommée dans la face avant du véhicule pour compléter le faisceau d'éclairage par temps pluvieux.

De plus, le volume supplémentaire occupé par le cache mobile dans le projecteur de route est très faible.

Le dispositif d'éclairage selon l'invention permet aussi de ne pas avoir à ajouter une source lumineuse supplémentaire en vue de compléter le faisceau d'éclairage pour la circulation par temps pluvieux.

Selon d'autres caractéristiques de l'invention :
- chaque projecteur de feu de route comporte un cache fixe qui est intercalé axialement entre le réflecteur et la lentille en vue d'optimiser la forme du faisceau d'éclairage lorsqu'il réalise une fonction de feu de route, ou de feu de route complémentaire, et le cache mobile, dans sa position d'occultation, se superpose axialement avec le cache fixe du projecteur associé de manière qu'une partie des rayons lumineux émis par la source soit occultée par le cache fixe et de manière qu'une autre partie des rayons lumineux soit occultée par le cache mobile, en vue de réaliser le faisceau d'éclairage complémentaire pour la circulation par temps pluvieux ;
- le cache mobile est monté pivotant autour d'un axe sensiblement transversal entre sa position d'occultation et sa position escamotée.

D'autres caractéristiques et avantages de l'invention apparaîtront à la lecture de la description détaillée qui suit pour la compréhension de laquelle on se reportera aux dessins annexés parmi lesquels :
- la figure 1 est une vue de dessus qui représente schématiquement un véhicule dans lequel l'agencement du dispositif d'éclairage est réalisé conformément aux enseignements de l'invention ;
- la figure 2 est un diagramme qui représente schématiquement la répartition sur un écran des faisceaux d'éclairage produits par les projecteurs de feu de croisement et par les projecteurs de feu de route du dispositif d'éclairage de la figure 1 ;
- la figure 3 est une vue en coupe axiale qui représente schématiquement un projecteur de feu de route du type elliptique équipé d'un cache mobile conforme aux enseignements de l'invention, le cache mobile occupant sa position d'occultation ;
- la figure 4 est une vue en perspective qui représente schématiquement le projecteur de feu de route de la figure 3 ;
- la figure 5 est une vue arrière qui représente schématiquement les caches du projecteur de feu de route de la figure 3.

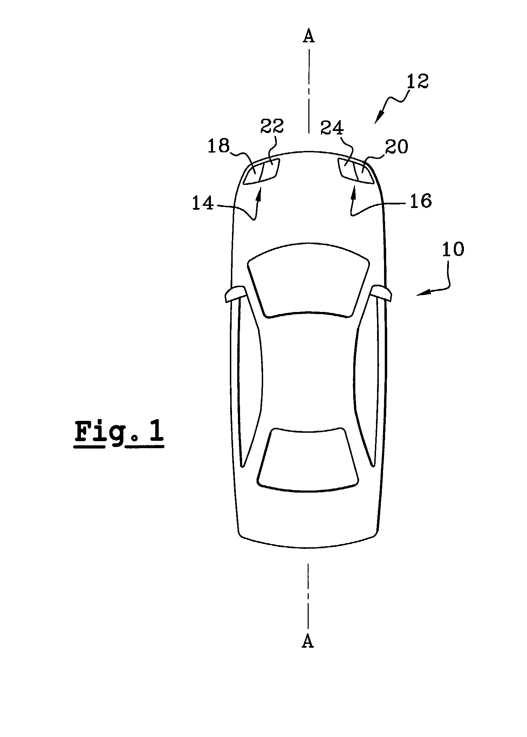

On a représenté sur la figure 1 un véhicule 10 équipé d'un dispositif d'éclairage 12 qui est réalisé conformément aux enseignements de l'invention.

Dans la suite de la description, on utilisera à titre non limitatif, une orientation d'arrière en avant suivant l'axe longitudinal A-A du véhicule 10, c'est à dire du bas vers le haut en considérant la figure 1.

Le dispositif d'éclairage 12 est agencé à l'avant du véhicule 10 et il comporte deux blocs d'éclairage, respectivement gauche 14 et droit 16, qui sont agencés de manière sensiblement symétrique par rapport à un plan de symétrie vertical passant par l'axe longitudinal A-A.

Chaque bloc d'éclairage 14, 16 comporte un projecteur de croisement 18, 20 et un projecteur de route 22, 24 distincts qui sont agencés de préférence derrière une glace de protection (non référencée).

Les projecteurs de croisement 18, 20 sont réalisés selon des techniques connues. Ils ne seront donc pas décrits plus précisément dans la présente description. On pourra se reporter utilement aux documents de l'art antérieur, par exemple aux documents FR-A-2.760.067 et FR-A-2.760.068 qui décrivent la réalisation d'un projecteur de croisement muni d'une source lumineuse et d'un réflecteur du type à surface complexe dont la géométrie est optimisée pour réaliser un faisceau réglementaire de feu de croisement.

Bien entendu, d'autres types de projecteurs de croisement peuvent être utilisés, notamment des projecteurs de croisement utilisant des réflecteur du type elliptique et des lentilles convergentes.

Lorsqu'ils sont allumés, les projecteurs de croisement 18, 20 produisent ensemble un faisceau réglementaire de feu de croisement Fc.

Le faisceau réglementaire de feu de croisement Fc est caractérisé notamment par une « coupure », c'est à dire une limite directionnelle au-dessus de laquelle on émet une faible intensité lumineuse. Cette coupure est généralement constituée d'un demi-plan horizontal, à gauche de l'axe longitudinal du projecteur (pour un sens de circulation à droite), et d'un demi-plan légèrement incliné vers le haut, à droite de ce même axe longitudinal. Ce dernier demi-plan est relevé d'un « angle de relèvement de coupure » qui est, pour un faisceau normalisé européen, de quinze degrés.

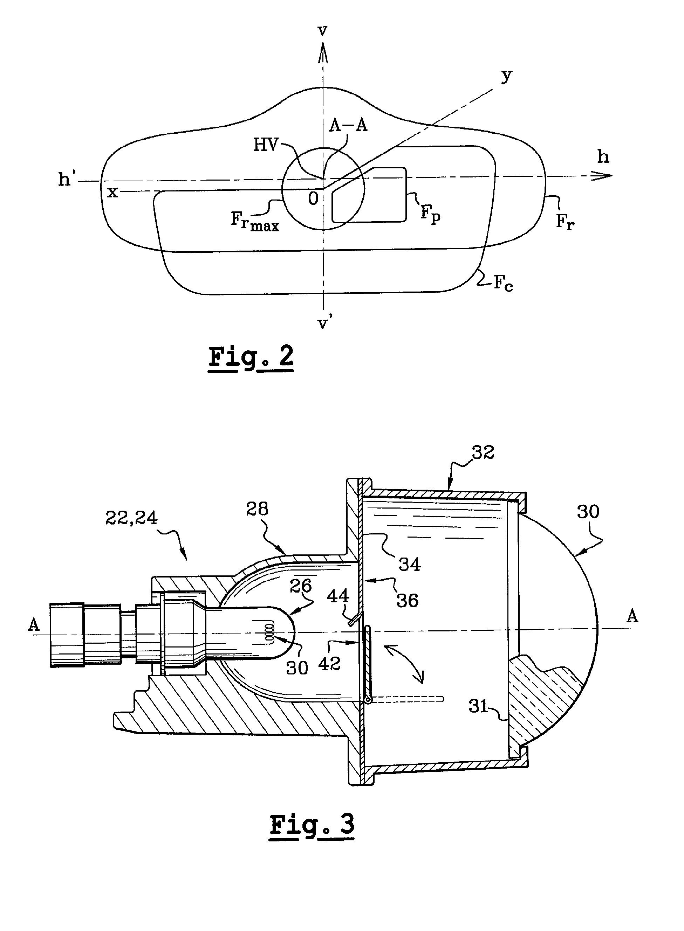

L'éclairement produit par un tel faisceau Fc sur un écran placé à environ vingt-cinq mètres à l'avant des projecteurs de croisement 18, 20 est représenté schématiquement sur la figure 2, le point HV étant la trace de l'axe longitudinal A-A du véhicule 10, à l'intersection du plan vertical v'v et du plan horizontal h'h. La coupure est définie par la demi-droite Ox qui s'étend parallèlement et au-dessous de l'axe horizontal h'h, du point O vers la gauche, et par la demi-droite Oy, inclinée de quinze degrés, qui s'étend du point O vers le haut et vers la droite.

On note que la description se réfère à un sens de circulation du véhicule 10 à droite. Pour un sens de circulation à gauche, il suffit de considérer les figures représentant l'écran inversées par rapport à l'axe v'v.

Les projecteurs de route 22, 24 sont des projecteurs du type elliptique. On a représenté sur la figure 3 un exemple d'un tel type de projecteur 22, 24.

De manière connue chaque projecteur de route 22, 24 comporte donc une lampe 26 montée dans le fond d'un réflecteur 28 du type elliptique de telle sorte que le filament 30 de la lampe 26 se situe au voisinage d'un premier foyer du réflecteur 28.

Bien entendu, d'autres types de lampe que les lampes à filament 26 peuvent être utilisés pour former la source lumineuse du projecteur 22, 24, notamment des lampes du type à décharge.

L'axe optique du projecteur 22, 24 est ici sensiblement horizontal et il peut être défini par exemple par les deux foyers du réflecteur 28.

L'axe optique étant généralement parallèle à l'axe longitudinal A-A du véhicule 10, dans la suite de la description on utilisera indistinctement la référence « A-A » pour nommer les deux axes.

On utilisera, à titre non limitatif, une orientation de haut en bas suivant un axe vertical, en considérant la figure 3.

On utilisera l'adjectif « transversal » pour qualifier des éléments qui sont contenus globalement dans un plan vertical et orthogonal à l'axe optique A-A.

Le projecteur 22, 24 comporte une lentille convergente 30 qui est montée, à l'avant du réflecteur 28, dans une partie d'ossature 32 du projecteur 22, 24 fixée sur une surface transversale avant 34 du réflecteur 28.

Le plan focal de la lentille 30 passe au voisinage du second foyer du réflecteur 28.

Le projecteur 22, 24 est par exemple monté de manière classique dans un boîtier (non représenté) fermé par une glace.

Lorsqu'ils sont allumés, les projecteurs de route 22, 24 produisent ensemble un faisceau d'éclairage réglementaire de feu de route Fr.

Le faisceau réglementaire de feu de route Fr est caractérisé notamment par une zone d'éclairage d'intensité maximale qui est émise globalement suivant l'axe optique A-A.

L'éclairement produit par un tel faisceau de feu de route Fr sur un écran placé à environ vingt-cinq mètres à l'avant des projecteurs de route 22, 24 est représenté schématiquement sur la figure 2. Comme on peut le voir sur cette figure, le faisceau réglementaire de feu de route Fr s'étend au-dessus et en dessous de l'axe horizontal h'h, de chaque côté de l'axe vertical v'v et il comporte une zone d'éclairage d'intensité maximale Frₘₐₓ qui est globalement centrée autour du point HV.

Avantageusement, en vue de corriger la répartition de l'intensité lumineuse dans le faisceau de feu de route Fr, et notamment en vue de provoquer une diminution progressive de l'intensité lumineuse dans la zone d'éclairage située verticalement sous l'axe optique A-A, qui est susceptible de provoquer une gêne visuelle par une intensité d'éclairage trop importante à proximité du véhicule, le projecteur de route 22, 24 comporte un cache fixe 36.

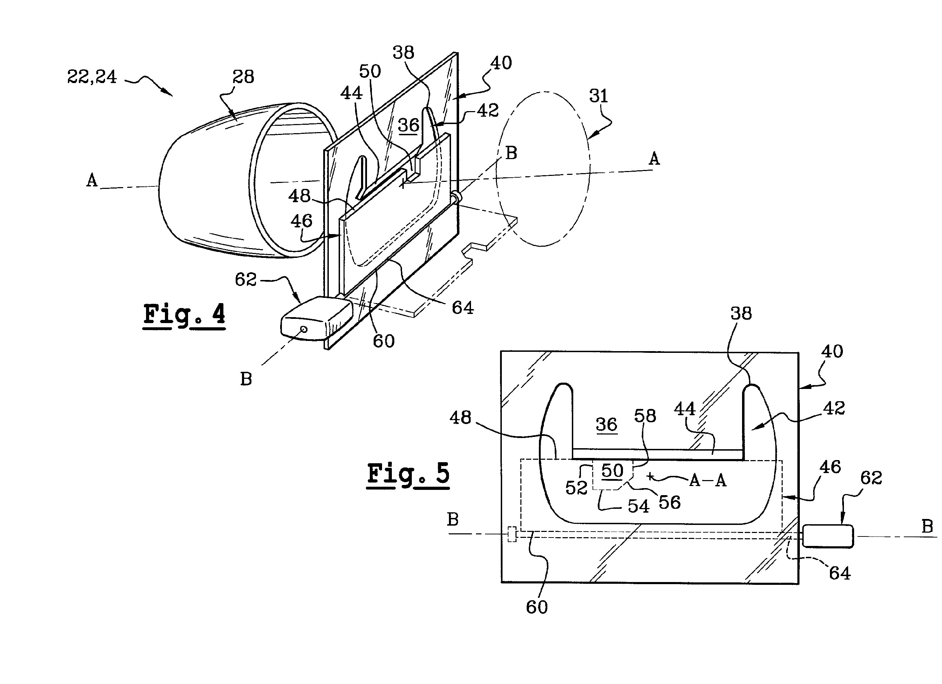

Le cache fixe 36, qui est représenté schématiquement en perspective sur la figure 4 et en vue de face sur la figure 5, est par exemple réalisé conformément aux enseignements de la demande de brevet français n°00.08903, déposée le 7 juillet 2000.

Sur la figure 4 on a représenté de manière simplifiée le projecteur 22, 24 de la figure 3. Sur cette figure on a donc représenté notamment une portion du réflecteur 28, le cache fixe 36 et, en traits discontinus, la face transversale arrière 31 de la lentille 30.

Le cache fixe 36 est intercalé axialement (A-A) entre le réflecteur 28 et la lentille 30, au voisinage du plan focal de la lentille 30 et au-dessus de l'axe optique A-A.

Dans le mode de réalisation représenté ici, le cache fixe 36 s'étend transversalement vers le bas depuis le bord supérieur 38 d'une plaque transversale 40 en forme de cadre délimitant une fenêtre 42 pour le passage des rayons lumineux issus de la lampe 26.

La plaque transversale 40 est ici montée contre la face transversale avant 34 du réflecteur 28.

Le cache fixe 36 comporte ici une portion d'extrémité inférieure 44 qui est inclinée vers l'arrière.

Lorsque le véhicule 10 circule par temps pluvieux, le dispositif d'éclairage 12 est prévu pour fonctionner dans un mode pluie c'est à dire que les projecteurs de croisement 18, 20 sont allumés et un dispositif approprié (non représenté), tel qu'un dispositif d'occultation mobile, modifie les caractéristiques du faisceau de feu de croisement Fc de manière à diminuer l'intensité lumineuse émise du côté gauche de l'axe vertical v'v.

Pour réaliser des projecteurs de feu de croisement susceptibles de fonctionner dans un mode pluie, on pourra se reporter par exemple au document WO-A-99/13265 dans lequel la figure 3 représente un exemple de faisceau d'éclairage pour temps pluvieux produit par des projecteurs de feu de croisement adéquats.

Conformément aux enseignements de l'invention, au moins un des projecteurs de route 22, 24 comporte un cache mobile 46 entre une position escamotée et une position d'occultation qui est prévu pour, lorsqu'il occupe sa position d'occultation, coopérer avec le cache fixe 36 de manière à réaliser un faisceau d'éclairage complémentaire pour temps pluvieux Fp qui enrichit sélectivement le faisceau de feu de croisement Fc produit par les projecteurs de croisement.

Les projecteurs de route 22, 24 équipés du cache mobile 46 enrichissent sélectivement le faisceau de feu de croisement Fc en augmentant l'intensité lumineuse émise dans une zone appropriée du faisceau de feu de croisement Fc qui est définie par la réglementation.

Cette zone, qui est représentée sur la figure 2, est située sous la coupure du faisceau de feu de croisement Fc, elle est décalée horizontalement vers la droite par rapport à l'axe longitudinal du véhicule et elle s'étend au-dessus et en dessous de l'axe horizontal h'h.

On remarque que, dans ladite zone, le faisceau complémentaire Fp a globalement la forme d'un rectangle dont le bord supérieur est biseauté à gauche, suivant une direction sensiblement parallèle à la partie inclinée Oy de la coupure du faisceau de croisement Fc.

On décrira maintenant le cache mobile 46 lorsqu'il occupe sa position d'occultation, en référence aux figures 3, 4 et 5, sa position escamotée étant représentée en traits discontinus sur les figures 3 et 4.

Le cache mobile 46 a ici la forme d'une plaque transversale sensiblement rectangulaire qui masque toute la partie inférieure de la fenêtre 42. Le bord supérieur 48 du cache mobile 46 est sensiblement horizontal et il est agencé globalement à la même hauteur que la portion inférieure 44 du cache fixe 36.

Le cache mobile 46 comporte dans son bord supérieur 48 une échancrure 50 qui a la forme du faisceau complémentaire Fp mais sa géométrie est inversée dans le plan transversal par rapport à l'axe optique A-A. En effet, le système optique constitué de la lampe 26, du réflecteur 28 et de la lentille 30 produit une image inversée de la forme délimitée par les caches 36, 46.

Par conséquent, l'échancrure 50 en vue arrière, telle que représentée sur la figure 5, est délimitée de gauche à droite par un premier bord sensiblement vertical 52, par un bord sensiblement horizontal inférieur 54, par un bord incliné 56 du bas vers le haut et par un deuxième bord sensiblement vertical 58.

En vue arrière, l'échancrure 50 s'étend intégralement à gauche du foyer objet de la lentille 30, représenté ici par l'intersection de l'axe optique A-A avec le cache mobile 46. L'échancrure 50 déborde au-dessus et en dessous de l'axe horizontal passant par le foyer objet de la lentille 30. Ce débordement est avantageusement de l'ordre de quelques millimètres.

Le cache mobile 46 est monté ici à pivotement par rapport au cache fixe 36 autour d'un axe géométrique inférieur B-B qui a ici une orientation sensiblement transversale et horizontale et qui s'étend ici le long du bord inférieur 60 du cache mobile 46.

Le projecteur de route 22, 24 comporte un actionneur de commande qui a ici la forme d'un moteur électrique 62 muni d'un arbre 64 qui s'étend suivant l'axe de pivotement B-B et sur lequel est monté le bord inférieur 60 du cache mobile 46.

Lorsque le cache mobile 46 occupe sa position escamotée, il s'étend ici dans un plan sensiblement horizontal et vers l'avant par rapport à l'arbre 64.

Pour commander le cache mobile 46 dans sa position escamotée, à partir de sa position d'occultation, le moteur 62 provoque donc le pivotement du cache mobile 46 d'un quart de tour autour de l'axe B-B, dans le sens horaire en considérant la figure 3.

Inversement, pour commander le cache mobile 46 dans sa position d'occultation, à partir de la position escamotée, le moteur 62 provoque le pivotement du cache mobile 46 d'un quart de tour autour de l'axe B-B, dans le sens anti-horaire en considérant la figure 3.

Avantageusement, le moteur électrique 62 est piloté par une unité électronique de commande (non représentée).

Bien entendu, d'autres types d'actionneurs de commande pourraient être utilisés, par exemple des actionneurs à électroaimants tels que ceux qui sont utilisés pour le pivotement des caches dans le document FR-A-2.796.449 auquel on pourra se reporter pour plus de détails.

Avantageusement, il suffit d'équiper un seul projecteur de route 22, 24, par exemple le projecteur de route droit 24, avec un cache mobile 46. L'aspect des projecteurs de route 22, 24 reste cependant symétrique car la différence entre les deux projecteurs 22, 24 réside dans un cache 46 et un mécanisme qui ne sont pas visibles depuis l'extérieur.

Selon un mode de réalisation particulier, les projecteurs de croisement 18, 20 peuvent être prévus pour fonctionner aussi en mode feu de route. A cet effet ils comportent par exemple une lampe à deux filaments décalés, un premier filament étant allumé pour réaliser le faisceau de feu de croisement Fc et un second filament étant allumé pour réaliser le faisceau de feu de route Fr.

Selon ce mode de réalisation particulier, les projecteurs de feu de route 22, 24 servent alors à réaliser un faisceau d'éclairage complémentaire, ou feu de route complémentaire, qui complète le faisceau d'éclairage produit par les projecteurs de feu de croisement 18, 20 en vue de réaliser ensemble le faisceau d'éclairage réglementaire de feu de route Fr.

On expliquera maintenant le fonctionnement du dispositif d'éclairage selon l'invention, en fonction des conditions de circulation.

Lorsque la luminosité extérieure est faible ou lorsqu'il fait nuit, le véhicule 10 circule en feu de croisement donc on allume les projecteurs de croisement 18, 20 qui fonctionnent en mode feu de croisement, les projecteurs de route 22, 24 étant éteints.

Lorsque le véhicule 10 circule en dehors des agglomérations et que la route est dégagée, le véhicule 10 peut circuler en feu de route donc on allume les projecteurs de route 22, 24 qui fonctionnent en mode feu de route.

Si l'on se trouve dans le cas du mode de réalisation particulier décrit ci-dessus où les projecteurs de croisement 18, 20 sont prévus pour fonctionner en mode feu de route, alors ils sont aussi allumés et les projecteur de route 22, 24 réalisent alors un faisceau de feu de route complémentaire.

Lorsque les projecteurs de route 22, 24 fonctionnent en mode feu de route, ou feu de route complémentaire, le cache mobile 46, qui est agencé ici dans le projecteur de route droit 24, efst commandé dans sa position escamotée.

Lorsque le véhicule 10 circule par temps pluvieux, on allume les projecteurs de croisement 18, 20 qui sont commandés en mode pluie et on allume le projecteur de route droit 24, en commandant le cache mobile 46 dans sa position d'occultation.

Les projecteurs de croisement 18, 20 réalisent alors un faisceau d'éclairage pour temps pluvieux qui correspond globalement au faisceau de croisement Fc avec une intensité lumineuse diminuée dans la partie gauche.

Le projecteur de route droit 24 réalise quant à lui un faisceau d'éclairage complémentaire pour temps pluvieux Fp qui ajoute de l'intensité lumineuse dans la partie droite du faisceau de croisement Fc.

Selon une variante de réalisation (non représentée) de l'invention, les projecteurs de feu de route 22, 24 peuvent être dépourvus de cache fixe 36. Le cache mobile 46 a alors une surface occultante plus importante et il comporte une fenêtre de forme similaire à l'échancrure 50 qui lui permet de réaliser le faisceau d'éclairage complémentaire pour temps pluvieux Fp, sans l'aide du cache fixe 36.

## Revendications

1. Dispositif d'éclairage (12) agencé à l'avant d'un véhicule automobile (10) comportant, de part et d'autre de l'axe longitudinal (A-A) du véhicule (10), deux projecteurs (18, 20) qui réalisent un faisceau d'éclairage réglementaire de feu de croisement (Fc) et qui sont susceptibles de fonctionner en mode pluie de manière à réaliser un faisceau d'éclairage réglementaire pour la circulation par temps pluvieux, et deux projecteurs (22, 24) qui réalisent un faisceau d'éclairage réglementaire du type feu de route (Fr), ou du type feu de route complémentaire, du type dans lequel chaque projecteur de feu de route (22, 24) comprend une source lumineuse (26), un réflecteur (28) du type elliptique dont un premier foyer est situé au voisinage de la source (26), une lentille convergente (30) dont un plan focal passe au voisinage d'un second foyer du réflecteur (28),
**caractérisé en ce que** au moins un projecteur de feu de route (22, 24) comporte un cache (46) qui est intercalé axialement, suivant l'axe optique (A-A) du projecteur (22, 24), entre le réflecteur (28) et la lentille (30), et qui est monté mobile entre une position escamotée et une position d'occultation dans laquelle il modifie la forme du faisceau d'éclairage produit par le projecteur de route (22, 24) associé de manière à réaliser un faisceau d'éclairage complémentaire (Fp) pour la circulation par temps pluvieux qui enrichit sélectivement le faisceau d'éclairage réglementaire pour la circulation par temps pluvieux produit par les projecteurs de croisement (18, 20).

2. Dispositif d'éclairage (12) selon la revendication précédente, **caractérisé en ce que** chaque projecteur de feu de route (22, 24) comporte un cache fixe (36) qui est intercalé axialement entre le réflecteur (28) et la lentille (30) en vue d'optimiser la forme du faisceau d'éclairage (Fr) lorsqu'il réalise une fonction de feu de route, ou de feu de route complémentaire, et **en ce que** le cache mobile (46), dans sa position d'occultation, se superpose axialement avec le cache fixe (36) du projecteur (22, 24) associé de manière qu'une partie des rayons lumineux émis par la source (26) soit occultée par le cache fixe (36) et de manière qu'une autre partie des rayons lumineux soit occultée par le cache mobile (46), en vue de réaliser le faisceau d'éclairage complémentaire (Fp) pour la circulation par temps pluvieux.

3. Dispositif d'éclairage (12) selon l'une quelconque des revendications précédentes, **caractérisé en ce que** le cache mobile (46) est monté pivotant autour d'un axe sensiblement transversal (B-B) entre sa position d'occultation et sa position escamotée.
